# EUROPÄISCHE PATENTANMELDUNG

(11) **EP 4 516 174 A1**
(43) Veröffentlichungstag der Anmeldung: **05.03.2025**
(21) Anmeldenummer: 24193759.8
(22) Anmeldetag: 09.08.2024
(51) Int. Cl.: A47J 42/44

(54) **VERFAHREN ZUM BETREIBEN EINER KAFFEEMÜHLE SOWIE KAFFEEMÜHLE**

(30) Priorität: 22.08.2023 DE 102023122380
(71) Anmelder: Wilhelm Gronbach GmbH & Co. KG, 6342 Niederndorf (AT)
(72) Erfinder: BOCKS, Stefan, 83112 Frasdorf (DE); KOPFENSTEINER, Peter, 6341 Ebbs (AT)
(74) Vertreter: Hofstetter, Schurack & Partner

(57) **Zusammenfassung**

Die Erfindung betrifft ein Verfahren zum Betreiben einer Kaffeemühle, bei welchem mittels eines Mahlwerks der Kaffeemühle Kaffeebohnen zu einem Pulver gemahlen werden. Während des Mahlens wird mittels einer Waage der Kaffeemühle das aus dem Mahlen resultierende Kaffeepulver gewogen, wodurch mehrere Messwerte (M1) eines Gewichts des aus dem Mahlen resultierenden Kaffeepulvers zeitlich nacheinander erfasst werden. Mittels einer elektronischen Recheneinrichtung wird in Abhängigkeit von den Messwerten (M1) ein zukünftiger, erster Zeitpunkt (t1) prädiziert, zu welchem das Gewicht einen vorbestimmten Soll-Wert aufweisen (16) wird. In Abhängigkeit von dem prädizierten ersten Zeitpunkt (t1) werden das Mahlwerk und dadurch das Mahlen zu einem zweiten Zeitpunkt (t2) gestoppt, welcher eine vorgegebene Zeitspanne (Z) vor dem prädizierten ersten Zeitpunkt (t1) liegt.

## Beschreibung

Die Erfindung betrifft ein Verfahren zum Betreiben einer Kaffeemühle gemäß dem Oberbegriff von Patentanspruch 1. Des Weiteren betrifft die Erfindung eine Kaffeemühle.

Derartige Kaffeemühlen und Verfahren zum Betreiben von solchen Kaffeemühlen sind aus dem allgemeinen Stand der Technik bereits hinlänglich bekannt. Die jeweilige Kaffeemühle weist ein Mahlwerk auf, mittels welchem Kaffeebohnen zu einem auch als Pulver bezeichneten Kaffeepulver gemahlen werden. Dies bedeutet, dass mittels des Mahlwerks die Kaffeebohnen gemahlen werden können, weil durch das Mahlen der Kaffeebohnen das genannte Kaffeepulver hergestellt wird. Aus dem Kaffeepulver kann dann insbesondere durch Aufbrühen des Kaffeepulvers ein Kaffeegetränk hergestellt werden.

Aufgabe der vorliegenden Erfindung ist es, ein Verfahren zum Betreiben einer Kaffeemühle sowie eine Kaffeemühle zu schaffen, sodass Kaffeebohnen besonders vorteilhaft gemahlen werden können.

Diese Aufgabe wird durch ein Verfahren mit den Merkmalen des Patentanspruchs 1 sowie durch eine Kaffeemühle mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben einer Kaffeemühle. Bei dem Verfahren werden mittels eines Mahlwerks der einfach auch als Mühle bezeichneten Kaffeemühle Kaffeebohnen, die auch einfach als Bohnen bezeichnet werden, zu einem auch als Kaffeepulver bezeichneten Pulver gemahlen. Dies bedeutet, dass bei dem Verfahren die Kaffeebohnen mittels des Mahlwerks gemahlen werden, wodurch aus den Kaffeebohnen das genannte Kaffeepulver erzeugt, das heißt hergestellt, wird. Insbesondere weist die Kaffeemühle einen vorzugsweise als Elektromotor ausgebildeten Motor auf, mittels welchem bei dem Verfahren das Mahlwerk angetrieben wird, um hierdurch die Kaffeebohnen zu dem Pulver zu mahlen.

Um nun die Kaffeebohnen besonders vorteilhaft mahlen zu können, ist es erfindungsgemäß vorgesehen, dass während des Mahlens mittels einer Waage der Kaffeemühle das aus dem Mahlen resultierende Kaffeepulver gewogen wird, wodurch, insbesondere zu mehreren, zeitlich aufeinanderfolgenden Messzeitpunkten mehrere Messwerte eines Gewichts des aus dem Mahlen resultierenden Kaffeepulvers zeitlich nacheinander erfasst werden. Mit anderen Worten werden beispielsweise die Messwerte des Gewichts mittels der Waage zu den genannten Messzeitpunkten gemessen, das heißt erfasst. Da die Messzeitpunkte zeitlich aufeinander folgen, werden die Messwerte zeitlich nacheinander erfasst.

Mittels einer elektronischen Recheneinrichtung, insbesondere der Kaffeemühle, wird, insbesondere während des Mahlens, in Abhängigkeit von den Messwerten ein insbesondere bezogen auf die Messzeitpunkte zukünftiger, erster Zeitpunkt prädiziert, das heißt vorhergesagt, zu welchem das Gewicht einen vorbestimmten Soll-Wert aufweisen wird. Des Weiteren ist es bei dem erfindungsgemäßen Verfahren vorgesehen, dass, insbesondere mittels der elektronischen Recheneinrichtung und ganz insbesondere während des Mahlens, in Abhängigkeit von dem prädizierten ersten Zeitpunkt das Mahlwerk und dadurch das Mahlen zu einem zweiten Zeitpunkt gestoppt, das heißt beendet werden, welcher eine vorgegebene Zeitspanne vor dem prädizierten ersten Zeitpunkt liegt. Das Mahlwerk und das Mahlen werden insbesondere dadurch gestoppt, dass, insbesondere mittels der elektronischen Recheneinrichtung, der Motor zu dem zweiten Zeitpunkt gestoppt, das heißt deaktiviert, wird. Dies bedeutet, dass bei dem erfindungsgemäßen Verfahren das Mahlwerk und somit das Mahlen der Kaffeebohnen gestoppt, das heißt beendet, werden, bevor mittels der Waage ein dem Soll-Wert entsprechender, aktueller Wert des Gewichts gemessen wird. Hintergrund der Erfindung ist insbesondere, dass das Kaffeepulver von dem Mahlwerk eine gewisse Strecke zurücklegen muss, um mittels der Waage gemessen werden zu können, wobei das Kaffeepulver eine gewisse Zeit für das Zurücklegen der Strecke benötigt. Diese Zeit wird auch als Nachfallzeit bezeichnet, wobei die Nachfallzeit beispielsweise die zuvor genannte, vorgegebene Zeitspanne ist. Durch das Prädizieren, mithin das Vorhersagen, des ersten Zeitpunkts und dadurch, dass das Mahlen zu dem zweiten Zeitpunkt gestoppt wird und dadurch, dass die vorgegebene Zeitspanne, insbesondere die Nachfallzeit, zwischen dem zweiten Zeitpunkt und dem ersten Zeitpunkt liegt, insbesondere derart, dass ein Beginn der Zeitspanne mit dem zweiten Zeitpunkt und ein Ende der Zeitspanne mit dem ersten Zeitpunkt zusammenfallen, werden die zuvor genannte Strecke und somit die Nachfallzeit berücksichtigt, sodass nach dem Stoppen des Mahlens ein Ist-Wert des Gewichts der bei dem oder durch das erfindungsgemäße Verfahren insbesondere automatisch hergestellten Kaffeepulvers dem Soll-Wert entspricht oder nur geringfügig von dem Soll-Wert abweicht.

Beispielsweise wird das durch das Mahlen erzeugte, mithin hergestellte Kaffeepulver bei dem Verfahren mittels eines Auffangelements aufgefangen. Das Auffangelement ist beispielsweise ein Siebträger. Die Waage kann unter Vermittlung des Auffangelements das Gewicht des erzeugten Kaffeepulvers messen, das heißt erfassen. Somit muss beispielsweise das Kaffeepulver nach dem Mahlen noch die zuvor genannte, auch als Nachfallstrecke bezeichnete Strecke von dem Mahlwerk bis zu dem Auffangelement zurücklegen, sodass unter Vermittlung des Auffangelements mittels der Waage das Gewicht des erzeugten Kaffeepulvers dann und erst dann gemessen werden kann, wenn das Kaffeepulver sich in dem Auffangelement befindet und somit die Strecke von dem Mahlwerk bis zu dem Auffangelement zurückgelegt hat. Würde das Mahlwerk und somit das Mahlen zu einem Zeitpunkt gestoppt, zu welchem die Waage den Soll-Wert des Gewichts unter Vermittlung des Auffangelements erfasst, so würde noch mittels des Mahlwerks erzeugtes Kaffeepulver nach dem Beenden des Mahlens nachfallen, mithin die Strecke von dem Mahlwerk zu dem Auffangelement zurücklegen, sodass in der Folge ein Ist-Wert des Gewichts des in dem Auffangelement aufgenommenen Kaffeepulvers größer als der gewünschte Soll-Wert wäre. Somit wäre in dem Auffangelement eine zu große Menge des Kaffeepulvers enthalten.

Ein Hintergrund der Erfindung ist, dass ein Verhältnis aus der Menge des gemahlenen Kaffeepulvers und einer Menge von Wasser, mit welchem das Kaffeepulver aufgebrüht wird, um dadurch aus dem Kaffeepulver und dem Wasser ein Kaffeegetränk herzustellen, eine wichtige Rolle für den Geschmack des herzustellenden Kaffeegetränks spielt. Ferner ermöglicht das erfindungsgemäße Verfahren, die Kaffeebohnen automatisch zu mahlen und somit das Kaffeepulver automatisch herzustellen, insbesondere derart, dass beispielsweise eine Person den Soll-Wert vorgeben kann, insbesondere dadurch, dass die Person wenigstens eine Eingabe in die Kaffeemühle insbesondere über eine Bedienschnittstelle der Kaffeemühle durchführt. Gegebenenfalls wird die Person zwar auf das Beenden des Mahlens hingewiesen, insbesondere mittels eines Hinweissignals, welches beispielsweise an eine Umgebung der Kaffeemühle ausgegeben wird und von einer sich in der Umgebung aufhaltenden Person optisch und/oder akustisch und/oder haptisch wahrnehmbar ist und/oder die Person erkennt an dem Stocken des Mahlwerks, dass das Mahlen beendet ist, jedoch wird beispielsweise die Person nicht über den tatsächlichen, mittels der Waage gemessenen Ist-Wert des Gewichts des Kaffeepulvers in dem Auffangelement in Kenntnis gesetzt. Somit geht die Person davon aus, dass der Ist-Wert des Gewichts des im Auffangelement aufgenommenen Kaffeepulvers dem insbesondere von der Person vorgegebenen Soll-Wert entspricht. Da jedoch beispielsweise dadurch, dass das Mahlen erst zu dem zuvor genannten Zeitpunkt gestoppt wird, zu welchem mittels der Waage der Soll-Wert des Gewichts des im Auffangelement aufgenommenen Kaffeepulvers gemessen wird, und dann auch bereits gemahlenes Kaffeepulver von dem Mahlwerk in den Auffangbehälter nachfällt, kann der Ist-Wert des Gewichts des in dem Auffangelement aufgenommenen Kaffeepulvers tatsächlich größer als der Soll-Wert sein. Verwendet nun beispielsweise jedoch die Person eine auf den Soll-Wert abgestimmte Menge von Wasser, um das Kaffeegetränk herzustellen, so ist das Gewicht beziehungsweise die Menge des in dem Auffangelement aufgenommenen Kaffeepulvers zu groß für die Menge des Wassers, sodass es für die Person zu einem unerwünschten Geschmack des Kaffeegetränks kommen kann. Dies kann nun durch das erfindungsgemäße Verfahren vermieden werden, dadurch, dass das Mahlen zu dem zweiten Zeitpunkt und somit vor dem vorher gesagten, ersten Zeitpunkt beendet wird. Zu dem zweiten Zeitpunkt ist ein Wert des Gewichts des Kaffeepulvers (noch) geringer als der Soll-Wert. Da jedoch ab dem zweiten Zeitpunkt noch bereits mittels des Mahlwerks gemahlenes beziehungsweise erzeugtes Kaffeepulver nachfällt, entspricht insbesondere nach der vorgegebenen Zeitspanne ein Ist-Wert des Gewichts des insbesondere in dem Auffangelement aufgenommenen Kaffeepulvers dem Soll-Wert oder der Ist-Wert weicht nur sehr geringfügig von dem Soll-Wert ab. Verwendet dann die Person die zuvor genannte, auf den Soll-Wert abgestimmte Menge des Wassers, um aus dem Wasser und dem mittels des Verfahrens gemahlenen Kaffeepulvers ein Kaffeegetränk herzustellen, so weist das hergestellte Kaffeegetränk einen von der Person gewünschten, vorteilhaften Geschmack auf. Das Verfahren ermöglicht somit beispielsweise ein automatisches, insbesondere vollautomatisches, Mahlen der Kaffeebohnen und somit ein automatisches, insbesondere vollautomatisches, Erzeugen, das heißt Herstellen, des Kaffeepulvers, insbesondere nach dem die Person den Soll-Wert vorgegeben hat.

Das Verfahren, das heißt das Wiegen des Kaffeepulvers und somit das Erfassen der Messwerte, das Prädizieren des ersten Zeitpunkts und das von dem prädizierten ersten Zeitpunkt abhängige Stoppen des Mahlwerks und somit des Mahlens erfolgt innerhalb des Mahlens, das heißt innerhalb desselben Mahlvorgangs.

Um das Kaffeepulver besonders vorteilhaft herzustellen, insbesondere derart, dass der Ist-Wert nicht oder nur sehr geringfügig von dem Soll-Wert abweicht, ist es bei einer Ausführungsform der Erfindung auch vorgesehen, dass zeitlich auf erste der Messwerte folgende, zweite der Messwerte für das Prädizieren des ersten Zeitpunkts stärker gewichtet werden als die ersten Messwerte. Hierdurch kann beispielsweise ein etwaiges Verändern eines Mahlgrads des Mahlwerks berücksichtigt werden. Mit anderen Worten kann das Mahlwerk einen einstellbare, das heißt veränderbaren, Mahlgrad aufweisen, sodass beispielsweise mittels des Mahlwerks die Kaffeebohnen wahlweise stärker oder weniger stark gemahlen werden können. Beispielsweise kann der insbesondere aktuell eingestellte Mahlgrad nicht erfasst werden, sodass ein beispielsweise während des Mahlens erfolgendes Verändern des Mahlgrads des Mahlwerks nicht erfasst werden kann, jedenfalls nicht direkt. Der Mahlgrad und dabei insbesondere eine während des Mahlens erfolgende Veränderung des Mahlgrads wirken sich jedoch auf eine während des Mahlens erfolgende, zeitliche Zunahme des mittels der Waage gemessenen Gewichts des aus dem Mahlen resultierenden Kaffeepulvers aus, sodass durch gegenüber den ersten Messwerten stärkeres Gewichten der zweiten Messwerte, die zeitlich auf die ersten Messwerte folgen und somit sozusagen jünger als die ersten Messwerte sind, der erste Zeitpunkt präzise vorhergesagt werden kann, insbesondere auch dann, wenn es während des Mahlens zu einer Veränderung des Mahlgrads kommt.

Die zweiten Messwerte sind zeitlich aufeinanderfolgende Messwerte, wobei die, insbesondere alle, zweiten Messwerte auf die ersten Messwerte folgen, welche zeitliche aufeinanderfolgen.

Unter dem Merkmal, dass zweiten Messwerte, die zeitlich auf die ersten Messwerte folgen, zweite der Messwerte für das Prädizieren des ersten Zeitpunkts stärker gewichtet werden als die ersten Messwerte, ist zu verstehen, dass ein Einfluss der zweiten Messerwerte auf das Prädizieren des ersten Zeitpunkts größer ist als ein Einfluss der ersten Messerwerte auf das Prädizieren des ersten Zeitpunkts. Mit anderen Worten werden die zweiten Messwerte für das Prädizieren des ersten Zeitpunkts stärker berücksichtigt als die ersten Messwerte.

Unter dem Merkmal dass die zweiten Messwerte für das Prädizieren des ersten Zeitpunkts stärker als die ersten Messwert gewichtet werden, ist beispielsweise zu verstehen, dass sowohl die ersten Messwerte als auch die zweiten Messwerte für das Prädizieren des ersten Zeitpunkts berücksichtigt werden, wobei die zweiten Messwerte für das Prädizieren des ersten Zeitpunkts gewichtet werden, und wobei ein Gewichten der ersten Messwerte für das Prädizieren des ersten Zeitpunkts unterbleibt oder die ersten Messwerte jeweils mit dem Faktor 1 gewichtet werden. Ferner ist es denkbar, dass für das Prädizieren des ersten Zeitpunkts die ersten Messwerte und die zweiten Messwerte berücksichtigt werden, wobei sowohl die ersten Messwerte als auch die zweiten Messwerte gewichtet werden, insbesondere derart, dass die ersten Messwerte und die zweiten jeweils mit einem von 1 unterschiedlichen Faktor gewichtet werden, wobei jedoch die zweiten Messwerte stärker, das heißt beispielsweise mit einem höheren Faktor gewichtet werden als die ersten Messwerte. Ferner ist es denkbar, dass beispielsweise für das Prädizieren des ersten Zeitpunkts bezogen auf die ersten und zweiten Messwerte nur die zweiten Messwerte berücksichtigt werden, sodass sozusagen die ersten Messwerte mit dem Faktor 0 gewichtet werden. Da die zweiten Messwerte für das Prädizieren des ersten Zeitpunkts stärker als die ersten Messwerte gewichtet, das heißt berücksichtigt werden, werden sozusagen die ersten Messwerte für das Prädizieren des ersten Zeitpunkts vergessen oder ausgeblendet, wodurch der erste Zeitpunkt besonders präzise ermittelt werden kann.

Eine weitere Ausführungsform zeichnet sich dadurch aus, dass der erste Zeitpunkt durch lineare Interpolation, insbesondere der Messwerte, prädiziert, das heißt vorhergesagt, wird, wodurch der erste Zeitpunkt besonders präzise vorhergesagt werden kann.

Bei einer weiteren Ausführungsform der Erfindung ist es vorgesehen, dass der erste Zeitpunkt durch lineare Interpolation, insbesondere der Messwerte, unter Nutzung der Methode der kleinsten Quadrate prädiziert, das heißt vorhergesagt, wird, wodurch der erste Zeitpunkt besonders präzise vorhergesagt werden kann.

Um den ersten Zeitpunkt besonders präzise vorhersagen zu können, ist es in weiterer Ausgestaltung der Erfindung vorgesehen, dass der erste Zeitpunkt durch lineare Interpolation unter Nutzung der Methode der kleinsten Quadrate mit einem Vergessenheitsfaktor prädiziert wird.

Die vorgegebene Zeitspanne ist beispielsweise in einem insbesondere elektrischen oder elektronischen Datenspeicher der elektronischen Recheneinrichtung gespeichert.

Als weiterhin besonders vorteilhaft hat es sich gezeigt, wenn nach dem Stoppen des Mahlens mittels der Waage das Pulver gewogen wird, wodurch wenigstens ein weiterer Messwert des Gewichts des Pulvers erfasst wird. Beispielsweise ist der weitere Messwert der Ist-Wert. Insbesondere wird mittels der Waage das Pulver nach dem Stoppen des Mahlens und nach der Zeitspanne und dabei insbesondere zu einem Ermittlungszeitpunkt gewogen, wodurch der weitere Messwert des Gewichts des Pulvers zu dem Ermittlungszeitpunkt erfasst wird. Dabei ist es vorzugsweise vorgesehen, dass sich der Ermittlungszeitpunkt zeitlich derart an dem zweiten Zeitpunkt anschließt, dass zwischen dem zweiten Zeitpunkt und dem Ermittlungszeitpunkt zumindest die Zeitspanne, vorzugsweise eine gegenüber der Zeitspanne größere Ermittlungszeitspanne, liegt. Hierdurch charakterisiert beispielsweise der weitere Messwert das Gewicht des gesamten, bei dem oder durch das Verfahren hergestellten Kaffeepulvers. Dabei ist es vorzugsweise vorgesehen, dass in Abhängigkeit von dem wenigstens einen weiteren Messwert die Zeitspanne korrigiert wird. Beispielsweise wird der weitere Messwert mit dem Soll-Wert verglichen. Überschreitet beispielsweise eine durch das Vergleichen des weiteren Messwerts mit dem Soll-Messwert ermittelte Differenz zwischen dem Soll-Wert und dem weiteren Messwert einen beispielsweise vorgebbaren oder vorgegebenen Schwellenwert, so wird die Zeitspanne korrigiert, das heißt verändert. Hierdurch kann beispielsweise bei einem zukünftigen Mahlvorgang, bei welchem mittels des Mahlwerks Kaffeebohnen gemahlen werden, eine übermäßige Differenz zwischen dem Soll-Wert und dem Ist-Wert beziehungsweise dem weiteren Messwert vermieden werden, sodass das Kaffeepulver besonders vorteilhaft hergestellt werden kann. Insbesondere ermöglicht das erfindungsgemäße Verfahren ein automatisches, insbesondere vollautomatisches, Mahlen der Kaffeebohnen, mithin Herstellen des Kaffeepulvers, sodass das Kaffeepulver für die zuvor genannte Person einfach und komfortabel hergestellt werden kann. Außerdem können unerwünschte Geschmacksvariationen von Kaffeegetränken, die aus Kaffeepulvern hergestellt werden, die mittels des erfindungsgemäßen Verfahrens gemahlen wurden, vermieden werden, sodass sich mittels des erfindungsgemäßen Verfahrens geschmacklich sehr gute Kaffeegetränke auf einfache und komfortable Weise herstellen lassen.

Ein zweiter Aspekt der Erfindung betrifft eine Kaffeemühle, welche zum Durchführen eines Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Das erfindungsgemäße Verfahren ermöglicht eine Vorhersage eines Verhaltens der Kaffeemühle und eines auch als Nachfallgewicht bezeichneten Gewichts, das nach dem Stoppen des Mahlens noch von dem Mahlwerk insbesondere in das Aufnahmeelement nachfällt und beispielsweise abhängig vom insbesondere aktuell eingestellten Mahlgrad sein kann. Die Vorhersage des Mahlverhaltens erfolgt insbesondere durch Vorhersagen des auch als Abschaltzeitpunkt bezeichneten, ersten Zeitpunkts, wobei die Vorhersage während des auch als Mahlvorgang bezeichneten Mahlens der Kaffeebohnen erfolgt. Insbesondere durch das beschriebene Gewichten der zweiten Messwerte können auch Änderungen wie Änderungen des Mahlgrads während des Mahlvorgangs berücksichtigt werden. Iterationen von einem Mahlvorgang zum nächsten Mahlvorgang können ebenso vermieden werden wie ein Nachmahlen innerhalb eines Mahlvorgangs. Das Verfahren basiert insbesondere auf der Annahme, dass eine Zeit, während welcher gemahlenes Pulver nach dem auch als Abschalten bezeichneten Stoppen des Mahlens noch nachfällt, zumindest nahezu konstant ist, und zwar unabhängig von Gewicht oder Mahlgrad. Dies kann insbesondere damit begründet werden, dass ein Weg, den das mittels des Mahlwerks gemahlene Pulver noch zurücklegt oder zurücklegen muss und mittels der Waage erfasst wird, immer gleich ist. Eine Reibung auch insbesondere durch Luft kann hier beispielsweise zumindest nahezu vernachlässigt werden. Eine Fallgeschwindigkeit, mit welcher das bereits gemahlene Pulver von dem Mahlwerk nachfällt, bis es gemessen werden kann, ist somit zumindest nahezu immer gleich und insbesondere unabhängig vom Gewicht. Vereinfacht ausgedrückt ist es bei dem Verfahren vorgesehen, dass während des Mahlvorgangs mittels eines Algorithmus abhängig von einer aktuellen, auch als Gewichtsänderung bezeichneten Änderung des gemessenen Gewichts, das heißt in Abhängigkeit von den Messwerten, vorhergesagt wird, wann, das heißt zu welchem Zeitpunkt der auch als Zielgewicht bezeichnete Soll-Wert zukünftig erreicht würde. Vor dem Hintergrund der Annahme der konstanten Nachfallzeit wird das Mahlen dann um diese Zeit, das heißt um die genannte Zeitspanne, früher, das heißt vor dem prädizierten, ersten Zeitpunkt abgeschaltet, das heißt gestoppt. Da die Gewichtsänderung während des Mahlvorgangs möglicherweise nicht konstant ist, insbesondere aufgrund einer Änderung des Mahlgrads oder eines Bohnennachfalls oder dergleichen, wird eine stärkere Gewichtung auf die letzten Messungen gelegt und die früheren Messungen während des Mahlvorgangs werden weniger stark gewichtet und dabei langsam vergessen oder ausgeblendet. Dies bedeutet, dass beispielsweise die zweiten Messwerte stärker als die ersten Messwerte gewichtet werden.

Denkbar ist, dass die Nachfallzeit, das heißt die Zeitspanne, ein Funktionsergebnis oder ein Ergebnis eines neuronalen Netzes ist, sodass auch Kaffeemühlen berücksichtigt werden können, die eine andere Mechanik bei einem Herausfallen des Pulvers aus dem Mahlwerk aufweisen.

Die Zeitspanne kann konstant sein, oder die Zeitspanne wird variiert, also verändert, insbesondere in Abhängigkeit von einem zeitlichen Verlauf der Messwerte, insbesondere direkt oder indirekt. Indirekt von den Messwerten kann die Zeitspann beispielsweise dadurch variiert werden, dass mittels eines Algorithmus in Abhängigkeit von den Messwerten der erste Zeitpunkt prädiziert wird, wobei in Abhängigkeit von einer Verarbeitung der Messwerte durch den Algorithmus die Zeitspanne variiert werden kann, wodurch die Zeitspanne in indirekter Abhängigkeit von den Messwerten variiert wird. Beispielsweise kann die Zeitspanne von Mahlvorgang zu Mahlvorgang variiert, das heißt verändert werden.

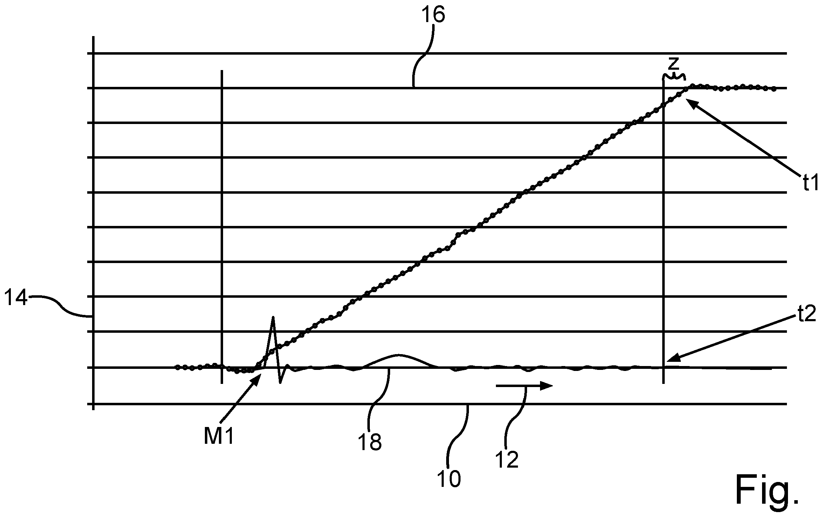

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Fig. ein Diagramm zum Veranschaulichen eines Verfahrens zum Betreiben einer Kaffeemühle.

Anhand der einzigen Fig. wird im Folgenden ein Verfahren zum Betreiben einer einfach auch als Mühle bezeichneten Kaffeemühle beschrieben. Die Kaffeemühle weist beispielsweise ein Mahlwerk auf, mittels welchem einfach auch als Bohnen bezeichnete Kaffeebohnen gemahlen werden können, um hierdurch aus den Kaffeebohnen ein auch als Kaffeepulver bezeichnetes Pulver herzustellen. Beispielsweise weist die Kaffeemühle ein Gehäuse mit einer Aufnahme auf, in welcher ein Aufnahmeelement wie beispielsweise ein Siebträger aufnehmbar ist. Die Kaffeemühle kann eine Führungseinrichtung aufweisen, mittels welcher das mittels des Mahlwerks gemahlene Kaffeepulver zu der und in die Aufnahme und dabei insbesondere zu dem und in den Siebträger geführt werden kann, sodass in dem Siebträger das mittels des Mahlwerks gemahlene Kaffeepulver aufgenommen werden kann. Bei dem Verfahren werden mittels des Mahlwerks die Kaffeebohnen zu dem Pulver gemahlen, das von dem Mahlwerk mittels der Führungseinrichtung zu dem und in das Auffangelement geführt und in dem Auffangelement aufgefangen und somit aufgenommen wird.

Beispielsweise weist die Kaffeemühle einen insbesondere als Elektromotor ausgebildeten Motor auf, mittels welchem das Mahlwerk angetrieben wird, um dadurch die Kaffeebohnen zu mahlen. Die Kaffeemühle weist auch eine insbesondere integrierte Waage auf, mittels welcher insbesondere unter Vermittlung des Siebträgers das Gewicht des in dem Siebträger aufgenommenen und aus dem Mahlen resultierenden Kaffeepulvers erfasst werden kann und bei dem Verfahren erfasst, das heißt gemessen, wird. Insbesondere weist die Kaffeemühle auch eine elektronische Recheneinrichtung auf, mittels welcher das Mahlwerk, insbesondere der Motor, angesteuert und somit betrieben werden kann. Des Weiteren weist die Kaffeemühle beispielsweise eine auch als Bedienschnittstelle bezeichnete Bedieneinrichtung auf, mittels welcher von einer Person bewirkte Eingaben in die Bedieneinrichtung und somit in die Kaffeemühle erfasst werden können.

Bei dem Verfahren wird beispielsweise mittels der Bedieneinrichtung wenigstens eine Eingabe einer Person erfasst, wobei die Eingabe einen Soll-Wert eines Gewichts des in dem Siebträger aufzunehmenden und aus dem auch als Mahlvorgang bezeichneten Mahlen resultierenden Kaffeepulver beschreibt, das heißt angibt oder charakterisiert.

Die einzige Fig. zeigt ein Diagramm, auf dessen Abszisse 10 die Zeit aufgetragen ist, welche von links nach rechts betrachtet, wie es durch den Pfeil 12 veranschaulicht ist, zunimmt, mithin vergeht. Auf der Ordinate 14 des Diagramms sind Werte des Gewichts des Kaffeepulvers aufgetragen, wobei der Soll-Wert in das Diagramm eingetragen und mit 16 bezeichnet ist. Die Waage kann unter Vermittlung des Siebträgers das Gewicht des in dem Siebträger aufgenommenen und aus dem Mahlen resultierenden Pulvers und somit Werte für das Gewicht messen, das heißt erfassen. Der Soll-Wert 16 ist oder charakterisiert ein von der Person gewünschtes Zielgewicht, welches infolge des Mahlvorgangs, mithin infolge des Mahlens, in dem Siebträger aufgenommen sein soll. Dies kann insbesondere deswegen der Fall sein, da die Person beispielsweise plant, aus dem das Zielgewicht aufweisenden, in dem Siebträger aufgenommenen Kaffeepulver und aus einer auf das Zielgewicht abgestimmten Menge von Wasser ein Kaffeegetränk herzustellen.

Nachdem die Person beispielsweise über die Bedieneinrichtung den Soll-Wert und somit das Zielgewicht in die Kaffeemühle eingegeben und somit vorgegeben hat, wird das Mahlen, mithin der Mahlvorgang, gestartet, insbesondere dadurch, dass die Person nach dem Eingeben des Soll-Werts 16 eine weitere, als Starteingabe fungierende Eingabe über die Bedieneinrichtung in die Kaffeemühle durchführt oder dadurch, dass ein Siebträger in die Kaffeemühle eingelegt wird.

Infolge der Starteingabe steuert beispielsweise die elektronische Recheneinrichtung den Motor an, wodurch der Motor und somit das Mahlwerk aktiviert werden. Der aktivierte Motor treibt das Mahlwerk an, welches die Kaffeebohnen zu dem Pulver mahlt. Das mittels des Mahlwerks gemahlene Kaffeepulver kann, insbesondere rein, schwerkraftbedingt entlang der Führungseinrichtung rutschen und mittels der Führungseinrichtung zu dem und in den Siebträger geführt werden. Da die Waage unter Vermittlung des Siebträgers das Gewicht des in dem Siebträger aufgenommenen Kaffeepulvers misst, und da mit zeitlich fortschreitendem Mahlen das Gewicht des in dem Siebträger aufgenommenen Kaffeepulvers ansteigt, kann dies durch die Waage unter Vermittlung des Siebträgers gemessen werden. Somit ist es bei dem Verfahren vorgesehen, dass während des Mahlens mittels der Waage der Kaffeemühle das aus dem Mahlen resultierende und in dem Siebträger aufgenommene Kaffeepulver gewogen wird, wodurch mehrere Messwerte M1 des aus dem Mahlen resultierenden und in dem Siebträger aufgenommenen Kaffeepulvers zeitlich nacheinander erfasst werden. Aus der Fig. ist erkennbar, dass die Messwerte M1 mittels der Waage zu jeweiligen Messzeitpunkten erfasst, das heißt gemessen, werden. Da die Messzeitpunkte zeitlich aufeinander folgen, folgen die Messwerte M1 zeitlich aufeinander. Aus der Fig. ist besonders gut erkennbar, dass mit fortschreitender Zeit, das heißt mit zeitlich fortschreitendem Mahlen (Mahlvorgang), das mittels der Waage unter Vermittlung des Siebträgers gemessene Gewicht des aus dem Mahlen resultierenden und somit durch das Mahlen hergestellten und in dem Siebträger aufgenommenen Kaffeepulvers zunimmt, mithin ansteigt.

Mittels der elektronischen Recheneinrichtung der Kaffeemühle wird in Abhängigkeit von den Messwerten M1 ein zukünftiger, erster Zeitpunkt t1 prädiziert, das heißt vorhergesagt, zu welchem das Gewicht den vorbestimmten Soll-Wert 16 aufweisen wird. In Abhängigkeit von dem prädizierten, mithin vorhergesagten, ersten Zeitpunkt t1 werden mittels der elektronischen Recheneinrichtung der Motor und somit das Mahlwerk und dadurch das Mahlen zu einem zweiten Zeitpunkt t2 gestoppt, das heißt deaktiviert oder abgeschaltet, welcher eine vorgegebene und dabei beispielsweise in einem Datenspeicher der elektronischen Recheneinrichtung gespeicherte Zeitspanne Z vor dem prädizierten ersten Zeitpunkt t1 liegt. Die Zeitspanne Z wird auch als Nachfallzeit bezeichnet. Die Nachfallzeit ist eine Zeit, die das bereits gemahlene Kaffeepulver benötigt, um von dem Mahlwerk entlang der Führungseinrichtung in den Siebträger zu fallen und somit unter Vermittlung des Siebträgers mittels der Waage gemessen zu werden. Wird also der Mahlvorgang zu dem Zeitpunkt t2 gestoppt, so fällt daraufhin noch während der Zeitspanne Z bereits gemahlenes Kaffeepulver in den Siebträger nach, sodass das Gewicht des gesamten, bei dem Verfahren gemahlenen und in dem Siebträger aufgenommenen Kaffeepulvers nach der Zeitspanne Z und somit ab dem Zeitpunkt t1 einen Ist-Wert aufweist, welcher dem Soll-Wert 16 entspricht oder nur sehr geringfügig von dem Soll-Wert 16 abweicht. Dann kann die Person aus dem in dem Siebträger aufgenommenen Kaffeepulver und der darauf abgestimmten Menge des Wassers das Kaffeegetränk herstellen, welches dann einen von der Person gewünschten Geschmack aufweist. Bei dem Verfahren wird beispielsweise der Zeitpunkt t1 durch eine lineare Vorhersage in Abhängigkeit von den Messwerten M1 vorhergesagt, das heißt prädiziert.

In das in der Fig. gezeigte Diagramm ist auch ein insbesondere zeitlicher Verlauf 18 eingetragen, welcher ein verlauf aus Differenzen zwischen vorhergesagtem, nächstem Messwert und tatsächlichem, gemessenem Messwert ist. Die Differenzen sind somit Vorhersagefehler, die genutzt werden, um die Vorhersage zu präzisieren.

## Patentansprüche

1. Verfahren zum Betreiben einer Kaffeemühle, bei welchem mittels eines Mahlwerks der Kaffeemühle Kaffeebohnen zu einem Pulver gemahlen werden,
**dadurch gekennzeichnet, dass:**
- während des Mahlens mittels einer Waage der Kaffeemühle das aus dem Mahlen resultierende Kaffeepulver gewogen wird, wodurch mehrere Messwerte (M1) eines Gewichts des aus dem Mahlen resultierenden Kaffeepulvers zeitlich nacheinander erfasst werden;
- mittels einer elektronischen Recheneinrichtung in Abhängigkeit von den Messwerten (M1) ein zukünftiger, erster Zeitpunkt (t1) prädiziert wird, zu welchem das Gewicht einen vorbestimmten Soll-Wert aufweisen (16) wird;
- in Abhängigkeit von dem prädizierten ersten Zeitpunkt (t1) das Mahlwerk und dadurch das Mahlen zu einem zweiten Zeitpunkt (t2) gestoppt werden, welcher eine vorgegebene Zeitspanne (Z) vor dem prädizierten ersten Zeitpunkt (t1) liegt.

2. Verfahren nach Anspruch 1,
**dadurch gekennzeichnet, dass**
zeitlich auf erste der Messwerte (M1) folgende, zweite der Messwerte (M1) für das Prädizieren des ersten Zeitpunkts (t1) stärker gewichtet werden als die ersten Messwerte (M1).

3. Verfahren nach Anspruch 1 oder 2,
**dadurch gekennzeichnet, dass**
der erste Zeitpunkt (t1) durch lineare Interpolation prädiziert wird.

4. Verfahren nach Anspruch 3,
**dadurch gekennzeichnet, dass**
der erste Zeitpunkt (t1) durch lineare Interpolation unter Nutzung der Methode der kleinsten Quadrate prädiziert wird.

5. Verfahren nach Anspruch 4,
**dadurch gekennzeichnet, dass**
der erste Zeitpunkt (t1) durch lineare Interpolation unter Nutzung der Methode der kleinsten Quadrate mit einem Vergessenheitsfaktor prädiziert wird.

6. Verfahren nach einem der vorhergehenden Ansprüche,
**dadurch gekennzeichnet, dass:**
- nach dem Stoppen des Mahlens mittels der Waage das Pulver gewogen wird, wodurch wenigstens ein weiterer Messwert des Gewichts des Pulvers erfasst wird; und
- in Abhängigkeit von dem wenigstens einen weiteren Messwert die Zeitspanne korrigiert wird.

7. Kaffeemühle, welche zum Durchführen eines Verfahrens nach einem der vorhergehenden Ansprüche ausgebildet ist.
